## Europäisches Patentamt

## European Patent Office

## Office européen des brevets

(19)

(11) Veröffentlichungsnummer: **0 172 992**
**B1**

(12) # EUROPÄISCHE PATENTSCHRIFT

(45) Veröffentlichungstag der Patentschrift:
**13.07.88**

(51) Int. Cl.⁴: **B 01 F 15/00**

(21) Anmeldenummer: **85105404.9**

(22) Anmeldetag: **03.05.85**

(54) **Knetmaschine.**

(30) Priorität: **21.08.84 DE 3430671**

(43) Veröffentlichungstag der Anmeldung:
**05.03.86 Patentblatt 86/10**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**DE - B - 1 080 486**
**FR - E - 74 835**
**GB - A - 324 763**
**US - A - 1 673 085**
**US - A - 3 318 606**
**US - A - 3 700 247**
**US - A - 4 091 520**
**US - A - 4 300 842**

(73) Patentinhaber: **IKA-Maschinenbau Janke & Kunkel GmbH & Co. KG, Janke & Kunkel-Strasse 10, D-7813 Staufen (DE)**

(72) Erfinder: **Lotz, Ekkehard, Goethestrasse 3, D-7843 Heitersheim (DE)**

(74) Vertreter: **Patentanwälte Dipl.-Ing. Hans Schmitt Dipl.-Ing. Wolfgang Maucher, Dreikönigstrasse 13, D-7800 Freiburg i.Br. (DE)**

ACTORUM AG

## Beschreibung

Die Erfindung betrifft eine Maschine zum Kneten und/oder Mischen, insbesondere eine Horizontalmaschine, mit wenigstens einem Knet- oder Mischwerkzeug, das beidseitig in einem Gehäuse der Maschine vorzugsweise an deren Knettrog auf einer Welle gelagert und abgedichtet ist.

Derartige Knetmaschinen sind z.B. aus US-A-1 673 085 bekannt. Dabei werden in der Regel zur Abdichtung der Welle für das Knet- und Mischwerkzeug Stopfbuchsendichtungen oder Radialwellendichtungen verwendet. Solche dynamisch belasteten Dichtungen haben jedoch den Nachteil, dass im Dichtungsbereich Reibungswärme erzeugt wird und dass ausserdem ein vergleichsweise hoher Verschleiss vorhanden ist, so dass ein hohes Mass an Wartungs- und Inspektionsaufwand notwendig ist. Die vorgenannte Problematik zeigt sich vor allem bei Knetmaschinen, die bei der Herstellung von Treib- und Explosivstoffen verwendet werden. Trotz grösster Sorgfalt und häufigem Wechsel des Packungsmateriales der Stopfbuchsendichtungen sind diese Dichtungen nur mit Einschränkung und nicht unbeträchtlichem Risiko für Treib- und Explosivstoffe sowie andere leicht entflammbare Produkte einsetzbar. Gleichzeitig ist jedoch beim Kneten und Mischen solcher Stoffe eine gute Dichtigkeit erforderlich, damit verhindert wird, dass nach der Bearbeitung Lufteinschlüsse in diesen Stoffen enthalten sind, die zu erheblichen Gefahren bei der Verwendung dieser Stoffe führen würden.

Es besteht deshalb die Aufgabe, eine Maschine der eingangs erwähnten Art zu schaffen, die einerseits gut abgedichtet ist, dennoch weitgehend wartungsfrei ist, reibungsbedingte Erwärmungen im Dichtungsbereich vermeidet und ein Kneten und Vakuum bzw. verminderten Druck zur Vermeidung von Lufteinschlüssen in der Knetmasse erlaubt.

Die Lösung dieser scheinbar widersprüchlichen Aufgabe besteht darin, dass die Abdichtung der Welle oder der Wellenzapfen des Werkzeuges als berührungsfreie Dichtungen und/oder als berührungslose Rückförderschneckendichtung ausgebildet ist und an dem Gehäuse der Maschine ausserhalb dieser Dichtung eine den Dichtungsbereich umschliessende vakuumdichte Kammer vorgesehen ist.

Zwar sind an sich berührungsfreie Dichtungen bzw. Rückförderschneckendichtungen bekannt. Bei Maschinen zum Kneten unter Vakuum oder Unterdruck sind diese Dichtungen jedoch nicht geeignet, weil der verbleibende Spalt den ständigen Zutritt von Luft ermöglichen würde. Die Erfindung kombiniert deshalb die an sich bekannte berührungsfreie Dichtung oder Rückförderschnekke mit ihren Vorteilen für eine reibungslose Abdichtung mit einer diese Dichtung aussen umschliessenden vakuumdichten Kammer, die den Zutritt von Luft bzw. einen Druckausgleich zwischen dem Inneren des unter Vakuum stehenden Knettroges und der Umgebung verhindert. Im Dichtungsbereich wird somit die für das Kneten von Explosivstoffen und für die Lebensdauer ungünstige Reibung der Dichtung vermieden und dennoch verhindert, dass Lufteinschlüsse in der Knetmasse durch eine berührungslose Dichtung begünstigt werden könnnen.

Besonders zweckmässig ist es, wenn die die Wellendichtung umschliessende vakuumdichte Kammer die Lagerung des Wellenzapfens bzw. der Welle des Werkzeuges umschliesst. Dadurch ist es möglich, dass die vakuumdichte Kammer auf der Seite des Wellenzapfens für das Werkzeug ausserhalb des Lagers einen hermetisch dicht befestigten Deckel od. dgl. Abschluss aufweist. Entsprechend einfach ist zumindest auf der Seite dieses Wellenzapfens die vakuumdichte Gestaltung der Kammer.

Die vakuumdichte Kammer kann auf der Seite der Antriebswelle des Werkzeuges von dieser Welle durchsetzt sein und ausserhalb des Wellenlagers eine die durchgehende Welle beaufschlagende Dichtung haben. In diesem Bereich ist eine Erwärmung durch Reibung innerhalb der Dichtung für das Knetgut nicht mehr von Bedeutung, da die Kammer und die Wellenlagerung sowie die berührungslose Wellendichtung einen genügend grossen Abstand zwischen dem eigentlichen Knetgut und dieser reibenden Dichtung herstellt.

Die beiden Rückförderschnecken zur Abdichtung beidseits des Knetwerkzeuges haben zweckmässigerweise gegensinnige Steigungen, und ihre Förderrichtungen weisen aufeinander zu und somit in das Innere des Knettroges. Dabei können die Rückförderschnecken zur berührungslosen Abdichtung bevorzugt für eine besonders günstige konstruktive Lösung, die ausserdem nachstehend erläuterte zusätzliche Möglichkeiten bieten, in Rohransätzen oder Stutzen des Gehäuses oder des Knettroges unter Bildung eines Umfangs-Zwischenspaltes angeordnet sein und auf die beidseits des Werkzeuges befindlichen Wellenstücke aufgesetzt, vorzugsweise aufgeschrumpft sein.

Besonders zweckmässig ist es, wenn die Rohrstutzen für die Abdichtung an der Aussenseite des Knettroges angeordnet sind und in die vakuumdichte Kammer ragen. Dies erlaubt eine besonders zweckmässige Weiterbildung der Erfindung dahingehend, dass in wenigstens einem die dichtende Rückförderschnecke umgebenden Rohrstutzen wenigstens eine Leitung mündet. Diese kann z.B. zum Zudosieren von Zuschlagstoffen zu dem zu knetenden Werkstoff und/oder zum Zuführen von Reinigungs- und Lösungsmitteln dienen. Dabei ist es vorteilhaft, dass die Rückförderschnecke jeweils in den Knettrog hin fördert, so dass die Zuschlagstoffe in ungewöhnlicher Weise in die Dichtung eingeführt und dadurch in das Knetgut eingebracht werden können. Zweckmässigerweise mündet dabei die Leitung an der Oberseite des Rohrstutzens in diesen und durchsetzt ihn. Somit kann die Schwerkraft die Einbringung von Zuschlagstoffen oder Reinigungsmitteln unterstützen.

Die in dem Rohrstutzen mündende Leitung kann verzweigt sein, und der jeweilige Zweig kann oberhalb eines Gewindeganges der Rückförderschnecke münden. Dadurch ist die Zuführung insbesondere von Reinigungsmitteln in den Bereich der Rückförderschnecken, nämlich deren Gewindegänge besonders schnell und einfach möglich und kann sogleich seine entsprechende reinigende Wirkung ausüben. Dabei ist es vorteilhaft, wenn die in den Rohrstutzen mündende Leitung so viele Abzweigungen hat, wie Gewindegänge an der Rückförderschnecke vorgesehen sind, und wenn oberhalb eines jeden Gewindeganges ein Leitungszweig im Inneren des Rohrstutzens mündet. Dies verspricht eine bestmögliche Reinigung der Rückförderschnecke von Knetgut durch einen entsprechenden Antrieb des Knetwerkzeuges bei gleichzeitiger Zufuhr von Reinigungsmitteln, wobei es gleichgültig ist, ob die Rückförderschnecke eingängig oder mehrgängig ist.

Insbesondere für die Zufuhr von Zuschlagstoffen beim Kneten unter Vakuum kann es zweckmässig sein, wenn in der Leitung ein Ventil und darüber vorzugsweise ein Vorratsbehälter mit Abschlussdeckel und Entlastungsventil vorgesehen sind, so dass ein Zudosieren beim Kneten unter Vakuum durch atmosphärischen Druck unterstützt werden kann. Ferner kann die Leitung eine Zuführung für ein Reinigungsmittel aufweisen.

Eine weitere Ausgestaltung der Erfindung von eigener schutzwürdiger Bedeutung kann darin bestehen, dass zwischen dem Inneren des Knettroges und den Dichtungskammern wenigstens eine Druckausgleichsverbindung, vorzugsweise eine Druckausgleichsleitung vorgesehen ist. Dadurch wird verhindert, dass in der berührungslosen Dichtung befindliche Knetmasse die nach aussen hin vakuumdichten Kammern vom Inneren des Knettroges trennt, so dass nur im Inneren des Knettroges der gewünschte Unterdruck bzw. das gewünschte Vakuum herrscht, in der erwähnten Dichtungskammer aber ein höherer Druck bestehen bleibt oder sich aufbaut. Vor allem bei der ersten Verminderung des Druckes innerhalb der Knetvorrichtung werden auch die durch die Wellendichtungen immerhin vom Knettrog getrennten Dichtungskammern entsprechend schnell evakuiert. Ohne eine solche Druckausgleichsverbindung könnte zwar die Evakuierung auch der Dichtungskammern über die Spalte der berührungslosen Dichtungen erfolgen, jedoch mit einer entsprechenden Verzögerung.

Vor allem bei Kombination einzelner oder mehrerer der vorbeschriebenen Merkmale und Massnahmen ergibt sich eine Knetmaschine, mit der unter Vakuum bzw. Unterdruck Explosivstoffe oder Treibstoffe oder ein sonstiges leicht entflammbares Knetgut unter Vakuum bearbeitet werden kann, so dass Lufteinschlüsse vermieden werden, ohne dass die Gefahr besteht, dass dieses Knetgut durch Reibungswärme der Dichtungen beeinträchtigt wird.

Nachstehend ist die Erfindung mit ihren ihr als wesentlich zugehörenden Einzelheiten anhand der Zeichnung noch näher beschrieben. Es zeigt:

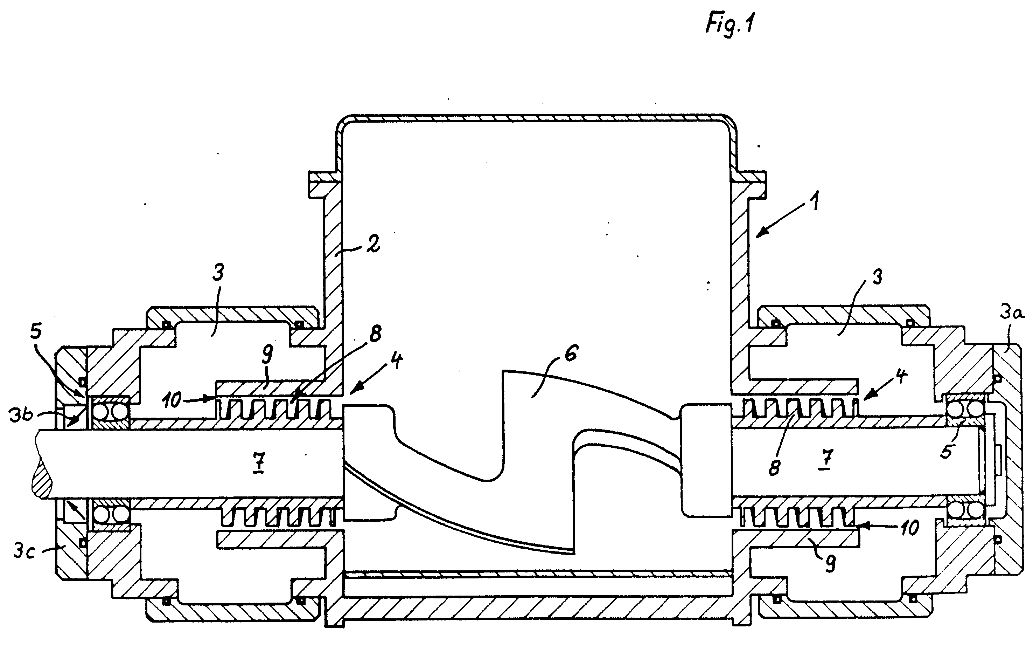

Fig. 1 einen Längsschnitt eines Knettroges einer Knetmaschine mit einem Knetwerkzeug, welches an einer Seite einen Wellenstummel und an der anderen Seite die Antriebswelle hat, die mit Wellendichtungen und Lagerungen versehen ist,

Fig. 2 eine Schnittdarstellung im Bereich einer Wellendichtung, wobei gegenüber Fig. 1 eine Druckausgleichsleitung zwischen einer Dichtungskammer und dem Knettrog vorgesehen ist, und

Fig. 3 eine der Fig. 2 entsprechende Teil-Schnittdarstellung, hier jedoch mit einer Zudosiereinrichtung im Bereich der Wellendichtung.

Ein zu einer Knetmaschine gehörender Knettrog 1 weist beidseitig seines Gehäuses 2 aussenseitig Dichtungskammern 3 auf, in denen sich Wellendichtungen 4 sowie Lager 5 zur Lagerung von mit einem Knetwerkzeug 6 verbundenen Wellenzapfen 7 befinden.

Die Wellendichtungen 4 sind als berührungslose Abdichtungen mit einer Rückförderschnecke 8 ausgebildet. Die Rückförderschnecke 8 befindet sich jeweils in einem einen Wellendurchgang bildenden Rohransatz oder -stutzen 9, der mit dem Gehäuse 2 verbunden ist. Die zu den Wellenzapfen 7 koaxialen Rohransätze 9 weisen einen lichten Innendurchmesser auf, der geringfügig grösser ist als der Aussendurchmesser der Rückförderschnecken 8. Dadurch ergeben sich berührungslose Abdichtungen, bei denen eine Erwärmung durch Reibung praktisch nicht auftritt. Der Zwischenspalt 10 ist dabei so bemessen, dass bei gleichzeitig berührungsloser Anordnung der Rückförderschnecke und des Rohransatzes 9 eine gute Abdichtung gegeben ist.

Die beiden zu einem Knetwerkzeug 6 gehörenden Rückförderschnecken 8 weisen gegensinnige Steigungen mit zum Inneren des Knettroges 1 und somit aufeinander zu gerichteten Förderrichtungen auf. Bei der vorgesehenen Arbeitsdrehrichtung des Knetwerkzeuges 6 wird somit das Knetprodukt, das in den Bereich der Abdichtungen gerät, jeweils durch die Rückförderschnecken 8 zum Inneren des Knettroges zurückgedrängt.

Die Dichtungskammer(n) 3 kann, wie in Fig. 2 gezeigt, mittels einer Leitung 11 mit dem Inneren des Knettroges 1 verbunden sein. Insbesondere dient diese Leitung 11 als Druckausgleichsleitung, wenn unter Vakuum geknetet wird. Durch die Leitung 11 wird beim Evakuieren des Knettroges 1 gleichzeitig auch über die Leitung 11 die Dichtungskammer 3 mitevakuiert. Dies hat den Vorteil, dass die Evakuierung der Dichtungskammer 3 nicht über den Dichtungsbereich bei der Wellendichtung 4 erfolgen muss. Insbesondere auch bei zum Teil mit Knetprodukt zugesetzter Rückförderschnecke 8 würde sich das Evakuieren der Dichtungskammer 3 nur langsam und unkontrolliert vollziehen können. Dies wird durch die Druckausgleichsleitung 11 vermieden. Andererseits wird auch verhindert, dass beim Zulassen von Atmosphärendruck im Bereich des Knettroges 1 ein unerwünschtes Druckgefälle zwischen diesem und der Dichtungskammer 3 entsteht, durch das gegebenenfalls Knetmaterial aus den Schneckengängen u. dgl. in die noch Unterdruck-beaufschlagte Dichtkammer 3 getrieben wird. Die Kammern 3 umschliessen dabei die Wellendichtung mit der Rückförderschnecke 8 und die Lagerung 5 des Wellenzapfens 7 bzw. der Welle 7, so dass trotz der berührungslosen Abdichtung auch bei einem Kneten unter Vakuum oder Unterdruck kein Druckausgleich über die Wellenrichtung im Inneren des Knettroges 1 erfolgen kann. Dadurch werden Lufteinschlüsse in der Knetmasse verhindert, obwohl die Dichtungen der Welle 7 selbst berührungslos sind.

Die vakuumdichte Kammer 3 auf der Seite des Wellenzapfens 7 hat dabei ausserhalb des Lagers 5 einen hermetisch dicht befestigten Deckel 3a, so dass hier die druckdichte Ausbildung der Kammer 3 besonders einfach ist.

Auf der Seite der Antriebswelle 7 des Werkzeuges 6 ist die vakuumdichte Kammer 3 von dieser Welle 7 durchsetzt und hat ausserhalb des Wellenlagers 5 eine die durchgehende Welle 7 beaufschlagende Dichtung 3b. Hier ist es unschädlich, wenn an der die Welle 7 berührenden Dichtung 3b Reibungswärme entsteht, weil zwischen dieser Stelle und dem eigentlichen Knettrog 1 die erfindungsgemässe Dichtkammer 3 angeordnet ist. Dabei ist die Dichtung 3b ebenfalls in einem Deckel 3c angeordnet, der allerdings den Durchtritt für die Welle 7 und für die Aufnahme der Dichtung 3b in axialer Nachbarschaft zu dem Lager 5 hat.

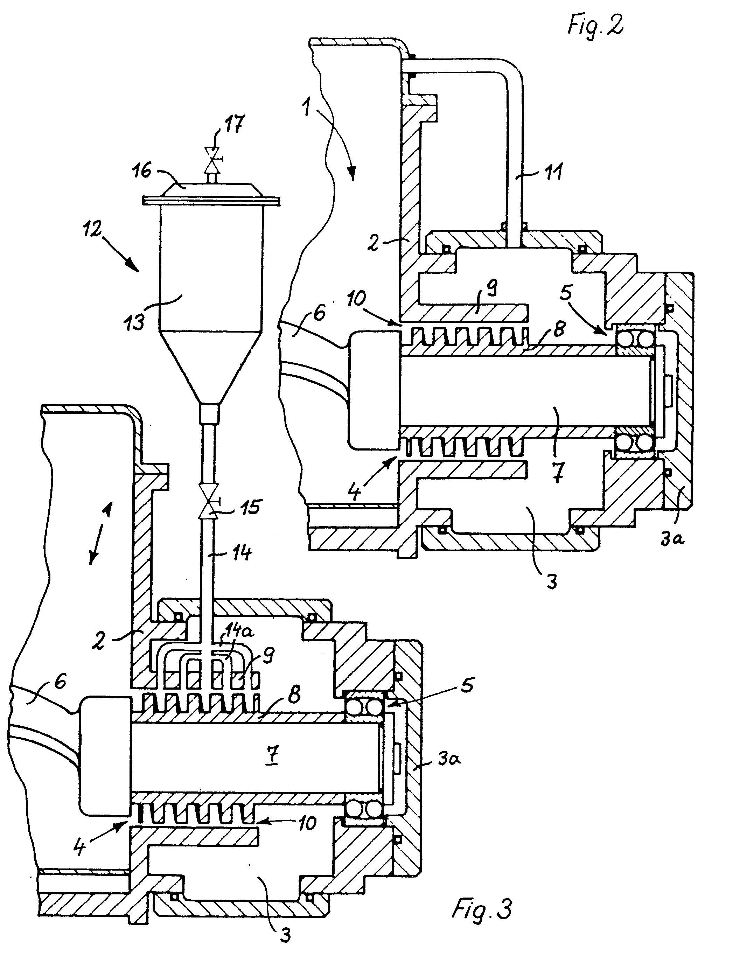

Fig. 3 zeigt eine Zudosiereinrichtung 12, mittels der Zuschlagstoffe über die Rückförderschnecke 8 dem im Knettrog befindlichen Knetgut zugeführt werden kann. Die Zudosiereinrichtung 12 weist einen Vorratsbehälter 13 auf, der über ein Dosierrohr 14 bei der Rückförderschnecke 8 angeschlossen ist. Im Verlauf des Dosierrohres 14 ist noch ein Ventil 15 eingesetzt. Das Dosierrohr 14 mündet etwa in der Mitte der Längserstreckung der Rückförderschnecke 8 und ist bei einer Öffnung des Rohransatzes 9 angeschlossen.

Bei einer Knetmaschine mit z. B. zwei Knetwerkzeugen 6 können somit insgesamt vier Dosierrohre angeschlossen werden. Bei entsprechend langen Rückförderschnecken 8 können gegebenenfalls auch pro Schnecke mehrere Dosierrohre angeschlossen sein. Die Zuführung von Zuschlagstoffen im Bereich der Rückförderschnecke 8 hat den wesentlichen Vorteil, dass die Dosierung genauer und auch schneller erfolgen kann, als bei einer Zuführung von Zuschlagstoffen durch den Gehäusedeckel, wobei dort die Zuschlagstoffe eingestäubt oder eingeträufelt werden müssen. In dem Ausführungsbeispiel gemäss Fig. 3 ist die in den Rohrstutzen 9 an dessen Oberseite mündende und ihn durchsetzende Leitung 14 verzweigt, und der jeweilige Zweig 14a mündet oberhalb eines Gewindeganges der Rückförderschnecke 8. Dadurch wird nicht nur das Zudosieren verfeinert und verbessert, sondern vor allem ist die Zufuhr von Reinigungsmitteln und deren Effektivität in den Gewindegängen der Rückförderschnecke 8 verbessert.

In Fig. 3 ist noch gut erkennbar, dass der Vorratsbehälter 13 mit einem Abschlussdeckel 16 versehen ist, an dem ein Entlastungsventil 17 angeschlossen ist. Beim Kneten unter Vakuum kann dadurch die Zudosierung von Zuschlagstoffen durch Öffnen des Entlastungsventiles 17 durch den äusseren atmosphärischen Druck unterstützt werden. Erwähnt sei noch, dass die Zuschlagstoffe flüssige oder rieselfähige Produktkomponenten sein können. Über das an den die Rückförderschnecke 8 umfassenden Rohransatz 9 angeschlossene Rohr 14 kann zu Reinigungszwecken auch ein Reinigungsmittel, z. B. eine Spülflüssigkeit zugeführt werden. Für umfassende Reinigungsarbeiten sind die Rohransätze 9 zweckmässigerweise im Bereich der Rückförderschnecken geteilt ausgebildet, so dass in diesem Bereich eine problemlose Demontage möglich ist.

Erwähnt sei noch, dass die Rückförderschnecken eingängig ausgebildet sein können, wodurch sich eine einfache Herstellbarkeit ergibt. Andererseits besteht aber auch die Möglichkeit, die Rückförderschnecken 8 mehrgängig, insbesondere dreigängig auszubilden, so dass sich auch bei niedrigen Drehzahlen eine gute Abdichtung ergibt.

**Patentansprüche**

1. Maschine zum Kneten und/oder Mischen, mit wenigstens einem Knet- oder Mischwerkzeug (6), das beidseitig in einem Gehäuse (2) der Maschine auf einer Welle (7) gelagert und abgedichtet ist, dadurch gekennzeichnet, dass die Abdichtung (4) der Welle oder der Wellenzapfen (7) des Werkzeuges (6) als berührungsfreie Dichtungen und/oder als berührungslose Rückförderschneckendichtung (8) ausgebildet ist und an dem Gehäuse (2) der Knetmaschine ausserhalb dieser Dichtung (4) eine den Dichtungsbereich umschliessende vakuumdichte Kammer (3) vorgesehen ist.

2. Maschine nach Anspruch 1, dadurch gekennzeichnet, dass die die Wellendichtung (4; 8) umschliessende vakuumdichte Kammer (3) die Lagerung (5) des Wellenzapfens (7) bzw. die Welle (7) des Werkzeuges (6) umschliesst.

3. Maschine nach Anspruch 1 oder 2, dadurch gekennzeichnet, dass die vakuumdichte Kammer (3) auf der Seite des Wellenzapfens (7) für das Werkzeug (6) ausserhalb des Lagers (5) einen hermetisch dicht befestigten Deckel (3a) od. dgl. Abschluss aufweist.

4. Maschine nach einem der Ansprüche 1 bis 3, dadurch gekennzeichnet, dass die vakuumdichte Kammer (3) auf Seiten der Antriebswelle (7) des Werkzeuges (6) von dieser Welle (7) durchsetzt ist und ausserhalb des Wellenlagers (5) eine die durchgehende Welle (7) beaufschlagende insbesondere berührende Dichtung (3b) hat.

5. Maschine nach einem der Ansprüche 1 bis 4, dadurch gekennzeichnet, dass die beiden Rückförderschnecken (8) zur Abdichtung beidseits des Knetwerkzeuges (6) gegensinnige Steigungen haben und ihre Förderrichtungen aufeinander zu und somit in das Innere des Knettroges (1) weisen.

6. Maschine nach einem der Ansprüche 1 bis 5, dadurch gekennzeichnet, dass die Rückförderschnecken (8) zur berührungslosen Abdichtung in Rohransätzen oder -stutzen (9) des Gehäuses (2) oder des Knettroges (1) unter Bildung eines Umfangs-Zwischenspaltes (10) angeordnet sind und auf die beidseits des Werkzeuges (6) befindlichen Wellenstücke (7) aufgesetzt, vorzugsweise aufgeschrumpft sind.

7. Maschine nach einem der Ansprüche 1 bis 6, dadurch gekennzeichnet, dass die Rohrstutzen (9) für die Abdichtung an der Aussenseite des Knettroges (1) angeordnet sind und in die Kammer (3) ragen.

8. Maschine nach einem der vorstehenden Ansprüche, dadurch gekennzeichnet, dass in wenigstens einem die dichtende Rückförderschnecke (8) umgebenden Rohrstutzen (9) wenigstens eine Leitung (14) mündet.

9. Maschine nach Anspruch 8, dadurch gekennzeichnet, dass die Leitung (14) an der Oberseite des Rohrstutzens (9) in diesen mündet und ihn durchsetzt.

10. Maschine nach einem der Ansprüche 1 bis 9, dadurch gekennzeichnet, dass die in dem Rohrstutzen mündende Leitung (14) verzweigt ist und der jeweilige Zweig (14a) oberhalb eines Gewindeganges der Rückförderschecke (8) mündet.

11. Maschine nach einem der Ansprüche 1 bis 10, dadurch gekennzeichnet, dass die in den Rohrstutzen (9) mündende Leitung (14) soviele Abzweigungen (14a) hat, wie Gewindegänge an der Rückförderschnecke (8) vorgesehen sind und oberhalb eines jeden Gewindeganges ein Leitungszweig (14a) im Inneren des Rohrstutzens (9) mündet.

12. Maschine nach einem der vorstehenden Ansprüche, dadurch gekennzeichnet, dass in der Leitung (14) ein Ventil (15) und darüber vorzugsweise ein Vorratsbehälter (13) mit Abschlussdeckel (16) und Entlastungsventil (17) vorgesehen sind, so dass ein Zudosieren beim Kneten unter Vakuum durch atmosphärischen Druck unterstützt ist.

13. Maschine nach einem der Ansprüche 1 bis 12, dadurch gekennzeichnet, dass die Leitung (14) eine Zuführung für ein Reinigungsmittel aufweist.

14. Maschine nach einem der Ansprüche 1 bis 13, dadurch gekennzeichnet, dass die Rückförderschnecke (8) eingängig oder mehrgängig, jedoch mit jeweils mehreren Gewindegängen ausgebildet ist.

15. Maschine nach einem der vorstehenden Ansprüche, dadurch gekennzeichnet, dass zwischen dem Inneren des Knettroges (1) und den Dichtungskammern (3) wenigstens eine Druckausgleichsverbindung, vorzugsweise eine Druckausgleichsleitung (11) vorgesehen ist.

**Claims**

1. A machine for kneading and/or mixing, including at least one kneading or mixing tool (6) which on both sides is mounted on a shaft (7) and sealed in a housing (2) of the machine, characterized in that the sealing (4) of the shaft or of the shaft journals (7) of the tool (6) takes the form of non-contacting seals and/or a non-contacting return conveyor worm seal (8) and a vacuum-tight chamber (3) is provided on the housing (2) of the kneading machine outside said seal (4) and encloses the sealing area.

2. The machine as claimed in claim 1, characterized in that the vacuum-tight chamber (3) enclosing the shaft seal (4; 8) encloses the bearing (5) of the shaft journal (7) and the shaft (7) of the tool (6).

3. The machine as claimed in claim 1 or claim 2, characterized in that the vacuum-tight chamber (3) on the side of the shaft journal (7) for the tool (6) has outside the bearing (5) a hermetically secured cover (3a) or similar closure.

4. The machine as claimed in any one of claims 1 to 3, characterized in that the vacuum-tight chamber (3) on the side of the driving shaft (7) of the tool (6) is traversed by said shaft (7) and has outside the shaft bearing (5) a seal (3b) acting upon, in particular contacting, the traversing shaft (7).

5. The machine as claimed in any one of claims 1 to 4, characterized in that the two return conveyor worms (8) for sealing on both sides of the kneading tool (6) have opposing pitches and the directions of feed of said worms are directed towards one another and hence into the interior of the kneading trough (1).

6. The machine as claimed in any one of claims 1 to 5, characterized in that the return conveyor worms (8) for non-contacting sealing disposed in sockets (9) of the housing (2) or of the kneading trough (1), while forming a peripheral interstice (10) and are attached to, preferably shrunk onto the shaft pieces (7) located on both sides of the tool (6).

7. The machine as claimed in any one of claims 1 to 6, characterized in that the sockets (9) for sealing are disposed on the outside of the kneading trough (1) and project into the chamber (3).

8. The machine as claimed in any one of the preceding claims, characterized in that at least one conduit (14) ends in at least one socket (9) surrounding the sealing return conveyor worm (8).

9. The machine as claimed in claim 8, characterized in that the conduit (14) ends in the socket (9) at the top thereof and traverses the socket.

10. The machine as claimed in any one of claims 1 to 9, characterized in that the conduit (14) ending in the socket (9) is branched and each branch (14a) ends above a thread of the return conveyor worm (8).

11. The machine as claimed in any one of claims 1 to 10, characterized in that the conduit (14) ending in the socket (9) has as many branches (14a) as threads are provided on the return conveyor worm (9), and that above each thread a branch (14a) of the conduit ends in the interior of the socket (9).

12. The machine as claimed in any one of the preceding claims, characterized in that provision is made in the conduit (14) for a valve (15) and above that preferably for a storage bin (13) with a cover plate (16) and relief valve (17), so that when kneading under vacuum any metered supply is aided by atmospheric pressure.

13. The machine as claimed in any one of claims 1 to 12, characterized in that the conduit (14) has an inlet for a cleaning agent.

14. The machine as claimed in any one of claims 1 to 13, characterized in that the return conveyor worm (8) is devised to be single-threaded or multi-threaded, however with in each case a plurality of turns.

15. The machine as claimed in any one of the preceding claims, characterized in that at least one connecting means for pressure equalization, preferably a pressure-equalizing conduit (11) is provided between the interior of the kneading through (1) and the sealing chambers (3).

**Revendications**

1. Machine à pétrir et/ou à mélanger, comprenant au moins un outil de pétrissage ou de mélange (6) qui est monté tournant sur un arbre (7) et de manière étanche sur les deux côtés d'un carter (2) de la machine, caractérisée par le fait que l'étanchéité (4) de l'arbre ou des tourillons d'arbre (7) de l'outil (6) est réalisée sous la forme de joints exempts de contact et/ou de joints à vis sans fin de refoulement sans contact (8), et qu'une chambre (3) étanche au vide entourant la région du joint est prévue sur le carter (2) de la machine à pétrir à l'extérieur de ce joint (4).

2. Machine selon la revendication 1, caractérisée par le fait que la chambre étanche au vide (3) entourant le joint d'arbre (4; 8) entoure le palier (5) du tourillon d'arbre (7) ou de l'arbre (7) de l'outil (6).

3. Machine selon la revendication 1 ou 2, caractérisée par le fait que la chambre étanche au vide (3) présente un couvercle (3a) fixé de manière étanche et hermétique, ou une fermeture similaire, du côté du tourillon de l'arbre (7) de l'outil (6) à l'extérieur du palier (5).

4. Machine selon l'une des revendications 1 à 3, caractérisée par le fait que, sur les côtés de l'arbre d'entraînement (7) de l'outil (6), la chambre étanche au vide (3) est traversée par cet arbre (7) et présente à l'extérieur du palier d'arbre (5) un joint (3b) agissant, en particulier avec contact, sur l'arbre traversant (7).

5. Machine selon l'une des revendications 1 à 4, caractérisée par le fait que les deux vis sans fin de refoulement (8) destinées à l'étanchéité des deux côtés de l'outil de pétrissage (6) présentent des pas opposés et que leurs sens de refoulement sont dirigés l'un vers l'autre, et donc vers l'intérieur de la cuve de pétrissage (1).

6. Machine selon l'une des revendications 1 à 5, caractérisée par le fait que les vis sans fin de refoulement (8) pour l'étanchéité sans contact sont montées dans des embouts tubulaires ou des manchons (9) du carter (2) ou de la cuve de pétrissage (1) avec formation d'un interstice périphérique (10), et qu'elles peuvent être posées, de préférence par frettage, sur les pièces d'arbre (7) qui se trouvent des deux côtés de l'outil (6).

7. Machine selon l'une des revendications 1 à 6, caractérisée par le fait que les embouts tubulaires d'étanchéité (9) sont montés sur le côté extérieur de la cuve de pétrissage (1) et font saillie dans la chambre (3).

8. Machine selon l'une des revendications précédentes, caractérisée par le fait qu'au moins une conduite (14) débouche dans au moins un embout tubulaire (9) entourant la vis sans fin de refoulement (8) servant à l'étanchéité.

9. Machine selon la revendication 8, caractérisée par le fait que la conduite (14) débouche dans l'embout tubulaire (9) à la partie supérieure de celui-ci et qu'il le traverse.

10. Machine selon l'une des revendications 1 à 9, caractérisée par le fait que la conduite (14) qui débouche dans l'embout tubulaire est ramifiée et que chaque branche (14a) débouche au-dessus d'une spire de la vis sans fin de refoulement (8).

11. Machine selon l'une des revendications 1 à 10, caractérisée par le fait que la conduite (14) débouchant dans l'embout tubulaire (9) présente autant de branches (14a) qu'il y a de spires sur la vis sans fin de refoulement (8), et qu'une branche (14a) de la conduite débouche à l'intérieur de l'embout tubulaire (9) au-dessus de chaque spire.

12. Machine selon l'une des revendications précédentes, caractérisée par le fait qu'elle comprend dans la conduite (14) une vanne (15) et, au-dessus, de préférence, un réservoir (13) muni d'un couvercle de fermeture (16) et d'un clapet de décharge (17), de sorte qu'une addition dosée peut être aidée par la pression atmosphérique lors du pétrissage sous vide.

13. Machine selon l'une des revendications 1 à 12, caractérisée par le fait que la conduite (14) présente une amenée pour un produit de nettoyage.

14. Machine selon l'une des revendications 1 à 13, caractérisée par le fait que la vis sans fin de refoulement (8) est à un ou à plusieurs filets, mais chacun comprenant plusieurs spires.

15. Machine selon l'une des revendications précédentes, caractérisée par le fait qu'au moins une liaison d'égalisation de la pression, qui est de préférence une conduite (11) d'égalisation de la pression, est prévue entre l'intérieur de la cuve de pétrissage (1) et les chambres d'étanchéité (3).

Fig.1

Fig.2

Fig.3